Europäisches Patentamt

European Patent Office

Office européen des brevets

(19)

(11) Veröffentlichungsnummer : **0 010 790**
**B1**

(12) **EUROPÄISCHE PATENTSCHRIFT**

(45) Veröffentlichungstag der Patentschrift :
03.02.82

(51) Int. Cl.³ : **G 01 M   1/04**

(21) Anmeldenummer : **79200563.9**

(22) Anmeldetag : **03.10.79**

(54) **Verfahren und Vorrichtung zur Bestimmung der Unwucht eines Rotationskörpers.**

(30) Priorität : **31.10.78 DE 2847295**

(43) Veröffentlichungstag der Anmeldung :
**14.05.80 (Patentblatt 80/10)**

(45) Bekanntmachung des Hinweises auf die Patenterteilung : **03.02.82 Patentblatt 82/05**

(84) Benannte Vertragsstaaten :
**CH DE IT SE**

(56) Entgegenhaltungen :
**DE - A - 2 321 437**
**DE - B - 1 044 531**
**DE - B - 2 215 002**
**DE - B - 1 238 240**
**DE - B - 2 608 891**
**DE - B - 2 732 738**

(73) Patentinhaber : **Schenck Auto-Service-Geräte GmbH**
**Landwehrstrasse 63 Postfach 4129**
**D-6100 Darmstadt (DE)**

(72) Erfinder : **Maus, Otfrid**
**Fiedlersee 34**
**D-6100 Darmstadt-Arheiligen (DE)**

(74) Vertreter : **Dallhammer, Herbert, Dipl.-Ing.**
**Carl Schenck AG Patentabteilung Postfach 4018**
**D-6100 Darmstadt (DE)**

Imprimerie Jouve, 18, rue St-Denis, 75001 Paris, France

EP 0 010 790 B1

Verfahren und Vorrichtung zur Bestimmung der Unwucht eines Rotationskörpers

Die Erfindung betrifft ein Verfahren und eine Vorrichtung zur Bestimmung der Unwucht eines Rotationskörpers in zwei parallelen senkrecht auf dessen Rotationsachse stehenden Ausgleichsebenen durch Zerlegen der Unwuchtwirkung in einen Momenten- und einen Kraftanteil mit Hilfe einer parallel zu den Ausgleichsebenen angeordneten Platte.

Durch die DE-PS 12 37 807 ist eine Auswuchtmaschine mit fundamentfestem Lagerständer und dagegen schwingfähig abgestützter Lagerbrücke, die den auszuwuchtenden Rotor trägt und deren Wuchtschwingungen in der Meßebene durch Meßumformer ermittelt werden, bekannt geworden, die sich dadurch auszeichnet, daß die Federn der Abstützung für die Lagerbrücke mit dieser und dem Lagerständer ein unlösbares Ganzes bildet. Eine derartige Auswuchtmaschine ist für das Auswuchten in zwei Ebenen nur dann verwendbar, wenn zwei derartige Lagerständer mit Hilfe eines Fundaments zu einer Auswuchtmaschine verbunden, eingesetzt werden. Hierbei treten zufolge der Schraubverbindung zwischen den beiden Lagerständern und dem Fundament Übertragungsschwierigkeiten auf, die die Messung beeinflussen können. Darüber hinaus sind derartige Lagerständer besonders aufwendig und es ist bei diesen Lagerständern Vorsorge dafür getroffen, daß in Richtung der Rotationsachse des auszuwuchtenden Rotationskörpers eine Bewegung der Lagerständer eindeutig vermieden wird.

Weiterhin ist durch die DE-PS 22 15 002 eine unterkritisch abgestimmte Auswuchtmaschine mit federelastisch abgestützter Wuchtkörperlagerung und mit zwei ortsfest getragenen Meßwertumformern zum Auswuchten eines Wuchtkörpers in mindestens zwei Ebenen bekannt geworden, die sich dadurch auszeichnet, daß die Wuchtkörperlagerung in an sich bekannter Weise mittels parallel zur Wuchtkörperdrehachse angeordneter an einem Ende ortsfest und an ihrem anderen Ende an der Wuchtkörperlagerung eingespannter Federn erfolgt, jedoch derart, daß an der Wuchtkörperlagerung ein biegesteifer Träger zur Ankopplung der beiden Meßwertumformer angebracht ist, wobei sich der Ankopplungspunkt des einen Meßwertumformers aus dem Schnittpunkt der Tangenten an die Biegelinie der Feder in beiden Einspannstellen unter dynamischer Unwuchtwirkung ergibt und der Ankopplungspunkt des anderen Meßwertumformers nicht in diesem Schnittpunkt liegt. Diese Auswuchtmaschine bedarf in ihrer federnden Abstützung einer räumlichen Erstreckung, um die Schwingungsumformer an der Rotationsachse angreifen zu lassen und um eine eindeutige Trennung zwischen den Schwingungen, hervorgerufen durch Unwuchtmoment und statische Unwucht, in beiden Ebenen zu bewirken. Darüber hinaus besteht eine derarige Auswuchtmaschine aus mehreren zusammenschraubbaren Teilen.

Durch die DE-PS 16 98 164 ist eine Auswuchtmaschine mit mechanischem Rahmen zum Auswuchten eines Wuchtkörpers in mindestens zwei Ebenen, bei der die Wuchtkörperlagerung durch zwei sich aufeinander abstützenden Blattfederpaare elastisch in im Winkel zueinander verlaufenden Schwingungsrichtungen geführt wird, bekannt geworden, die sich dadurch auszeichnet, daß eine erste Federanordnung in bekannter Weise durch Parallelanordnung die Drehachse des Wuchtkörpers in einer Richtung zwangfrei parallel führt, jedoch die Federn der anderen sich auf der ersten abstützenden Federanordnung unter einem solchen Winkel zueinander geneigt angeordnet sind, daß ihre gedachten Verlängerungen sich in Höhe der einen Ausgleichebene schneiden. Eine derartige Auswuchtmaschine erfordert zwingend eine zweite sich auf Federn abstützende geneigte Federanordnung, wobei sich die gedachten Verlängerungen dieser Federn in Höhe der einen Ausgleichsebene schneiden müssen. Eine derartige Auswuchtmaschine ist in ihrer Konstruktion aufwendig und es muß Sorge dafür getragen werden, daß eine sichere Abstützung der einen Ausgleichsebene in der Ebene, in der sich die gedachten Verlängerungen schneiden, gewährleistet ist ; dieses führt zwangsläufig bei jedem neuen Rotationskörper zu zusätzlich zeitraubenden Justierarbeiten. Darüber hinaus besteht auch diese Auswuchtmaschine aus mehreren Bauteilen, die durch Verschrauben miteinander verbunden werden, was zu Fehlern in der Meßübertragung führen kann.

Ausgehend von diesem Stand der Technik liegt der vorliegenden Erfindung die Aufgabe zugrunde, ein Auswuchtverfahren und eine Auswuchtmaschine in Vorschlag zu bringen, wobei eine Messung der Unwucht in zwei Ebenen erreicht wird, ohne eine sich längs des auszuwuchtenden Rotationskörpers oder der Rotationsachse erstreckende federnde Abstützung zur Messung der Unwuchtmomente und Kräfte. Diese Aufgabe wird erfindungsgemäß dadurch gelöst, daß die Gesamtunwuchtwirkung der Platte, die partiell federnd ausgebildet ist, induziert wird, daß der Momentenanteil der Unwuchtwirkung zufolge Drehung des federnder Plattenteils gegenüber dem feststehenden Plattenteil um eine Achse senkrecht zur Rotationskörperdrehachse als Schwingung weitergegeben wird, und daß der Kraftanteil zufolge translatorischer Bewegung des federnden Plattenteils als Schwingung weitergegeben wird. Durch die Erfindung wird erstmals die Bestimmung der Unwucht, bezogen auf zwei beliebige Ausgleichsebenen eines Rotationskörpers erreicht, durch Messung der in einem Rotationskörper durch dessen Unwucht hervorgerufenen Schwingungen, die sich als translatorische Schwingungen und Drehschwingungen darstellen in einer Ebene. Damit wird gleichzeitig der bisher erforderliche Aufwand an Abstimmelementen, um eine möglichst fehlerfreie Bestimmung der Unwucht zu erhalten, verringert, und es wird darüber hinaus durch das erfindungsgemäße Verfahren zur Bestimmung der Unwucht eines Rotationskörpers in zwei Ebenen unabhängig von der Richtung der Rotationsachse erreicht, insbesondere unabhängig, ob die Rotationsachse des Körpers vertikal oder horizontal verläuft.

Als eine Ausgestaltung dieses erfindungsgemäßen Verfahrens wird es angesehen, daß die Weitergabe der getrennten Schwingungen senkrecht zueinander erfolgt. Durch die Möglichkeit des senkrechten Abnehmens der beiden Schwingungsanteile einer Unwuchtschwingung wird eine eindeutige Trennung zwischen der statischen Unwucht und einem Unwuchtmoment erreicht.

In noch weiterer Ausgestaltung der Erfindung wird vorgeschlagen, daß die Weitergabe der durch das Unwuchtmoment hervorgerufenen Schwingungen parallel zur Rotationsachse und die durch die Kraft hervorgerufenen translatorische Schwingung parallel zu einer Ebene senkrecht zur Rotationsachse erfolgt. Durch diesen erfindungsgemäßen Verfahrenschritt wird die Bestimmung der Unwucht in zwei Ebenen in einem einzigen Meßlauf erreicht.

Eine Auswuchtmaschine mit Lagerständer und einer sich auf einer Platte abstützenden Wuchtkörperlagerung für den auszuwuchtenden Rotationskörper und mit Schwingungsumformern zur Durchführung des Verfahrens zeichnet sich dadurch aus, daß die Platte dergestalt mit Schlitzen versehen ist, daß die Drehschwingungen der Platte über auf Biegung beanspruchte Stege weiterleitbar sind und die translatorischen Schwingungen der geschlitzten Platte über auf Druck und Zug beanspruchte Stege der geschlitzten Platte weiterleitbar sind. Die erfindungsgemäße Auswuchtmaschine ist somit unterkritisch abgestimmt und ermöglicht den Einsatz von Kraftmeßelementen wie Piezoelementen oder Dehnungsmeßstreifen.

Eine Auswuchtmaschine mit Lagerständer und einer sich auf einer Platte abstützenden Wuchtkörperlagerung für den auszuwuchtenden Rotationskörper und mit Schwingungsumformern zur Durchführung des Verfahrens zeichnet sich dadurch aus, daß die Platte dergestalt mit Schlitzen versehen ist, daß Stege durch die Unwuchtwirkung gleichzeitig auf Zug, Druck und Biegung in zwei räumlichen senkrecht aufeinander stehenden Richtungen beansprucht werden und daß mindestens zwei Schwingungsumformer, deren Meßrichtungen senkrecht aufeinander stehen, deren Verformung messen. Eine derartige erfindungsgemäße Auswuchtmaschine zur Durchführung des Verfahrens ermöglicht es, die Verformung der Platte, hervorgerufen durch Unwuchtschwingungen, wegmessend mechanisch elektrischen Schwingungsumformern zuzuleiten und die elektrischen Signale einer Weiterverarbeitung zuzuführen.

Das erfindungsgemäße Verfahren läßt sich somit mittels reiner Kraftmessung oder mittels Wegmessung durch entsprechend ausgestaltete Auswuchtmaschinen durchführen.

In noch weiterer Ausgestaltung des Erfindungsgegenstandes wird vorgeschlagen, daß bei vertikaler Anordnung der Rotationsachse das Gewicht des Rotationskörpers über mindestens eine vertikale Stütze und daß die Reaktionskraft des Schwingungsumformers für die Drehschwingungen über eine weitere vertikale Stütze direkt gegen das Fundament abstützbar sind. Zufolge getrennter Abstützung der Rotationsachse und des Schwingungsumformers gegenüber dem Fundament wird eindeutig das Gewicht des Rotationskörpers eliminiert und es werden auch keine Beeinflussungen des Meßwertes durch das Gewicht der Platte hervorgerufen.

Eine noch weitere Ausgestaltung des Erfindungsgegenstandes zeichnet sich dadurch aus, daß die Platte einstückig ist. Durch die Einstückigkeit der erfindungsgemäßen Platte treten Fehler bei der Meßwertübertragung, die durch eine lösbare mechanische Verbindung auftreten können, nicht mehr auf. Wird die Formgebung der Stege beispielsweise durch Ausbrennen aus einer Blechplatte hergestellt, so kann die Toleranz der Stege im Hinblick auf ihren Querschnitt sehr eng gehalten werden. Jedoch ist es ohne weiteres im Rahmen der Erfindung möglich, auch gegossene oder geschweißte Platten als einstückig geschlitzte Platten herzustellen. Die Bezeichnung Platte ist nicht eingeschränkt auf eine glatte Platte. Es werden auch plattenförmige geschlitzte Gebilde, die beispielsweise Vertiefungen und Erhöhungen oder Auflageklötze für die Schwingungsumformer tragen und die einstückig mit dem geschlitzten Gebilde hergestellt wurden, vom Schutzumfang der Erfindung umfaßt.

Die Umwandlung der durch die in einem Körper vorhandenen Unwucht erzeugten mechanischen Schwingungen innerhalb der geschlitzten Platte in Dreh- und translatorische Schwingungen erfolgt dadurch, daß die senkrecht auf der geschlitzten Platte stehenden Rotationsachse um eine in der geschlitzten Platte gedachten Achse verdreht wird, welche senkrecht auf der Rotationsachse des zu untersuchenden Rotationskörpers steht und diese durchdringt. Zufolge Verdrehen der geschlitzten Platte um diese Achse entstehen Drehschwingungen, die dem Umwuchtmoment des zu untersuchenden Körpers entsprechen und die von einem Schwingungsumformer aufgenommen werden, dessen Meßachse parallel zur Rotationsachse des zu untersuchenden Körpers ist. Der statische Unwuchtanteil bewirkt eine translatorische Schwingung der geschlitzten Platte in Richtung einer Ebene senkrecht zur Rotationsachse. Diese Schwingung wird durch mindestens einen Schwingungsumformer aufgenommen, dessen Meßachse senkrecht zur Rotationsachse des zu untersuchenden Rotationskörpers ist. Die von den beiden Schwingungsumformern aufgenommenen mechanischen Schwingungen werden in elektrische Signale umgewandelt und anschließend zur Bestimmung der Unwuchtgröße in zwei Ausgleichsebenen und bei Verwendung eines Bezugswinkelgebers auch zur Bestimmung der Winkellage der Unwucht herangezogen.

In der nachfolgenden Zeichnung wird die Erfindung näher erläutert :

Es zeigen schematisch :

Fig. 1. eine erfindungsgemäße federnde Abstützung als Bestandteil einer Auswuchtmaschine mit horizontal gelagerter Wuchtspindel

Fig. 2. die erfindungsgemäße federnde Abstützung gemäß Fig. 1 in Seitenansicht

Fig. 3. die erfindungsgemäße federnde Abstützung in Verbindung mit Kraftaufnehmern und einer Abstützung

Fig. 4. eine noch weitere erfindungsgemäße Ausgestaltung der federnden Abstützung

Fig. 5. die erfindungsgemäße federnde Abstützung als Bestandteil einer Auswuchtmaschine mit vertikal gelagerter Wuchtspindel.

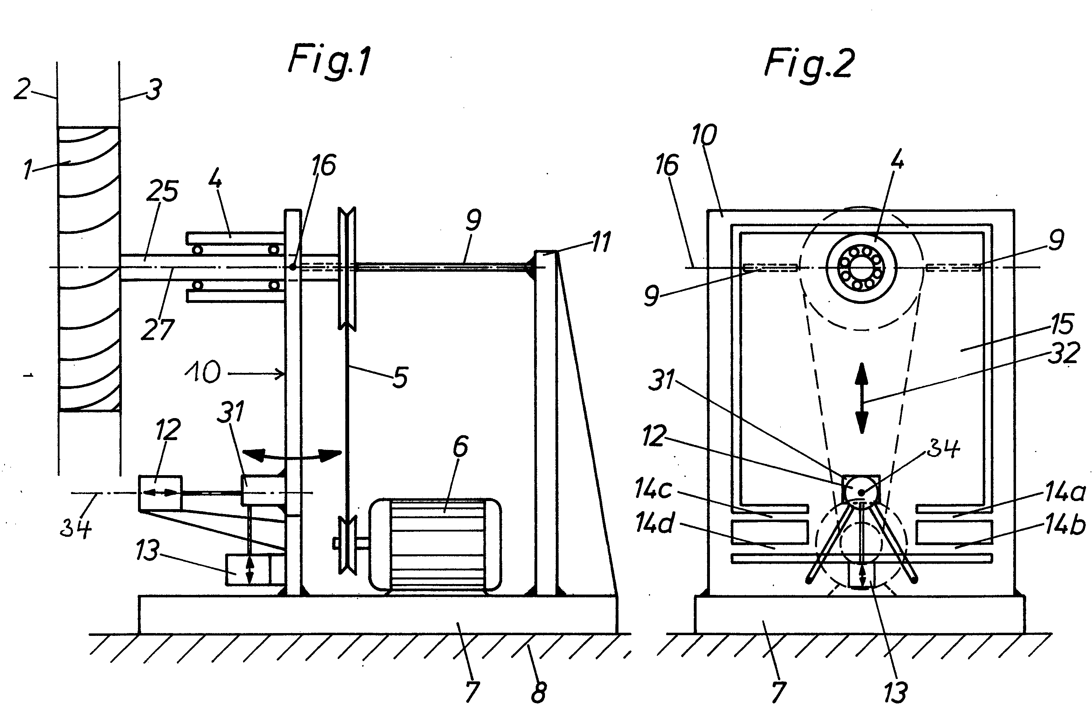

Gemäß Fig. 1 wird ein auszuwuchtender Rotationskörper 1, im vorliegenden Fall ein Gebläselüfterrad mit Ausgleichsebenen 2, 3 von einer Wuchtspindel 25 aufgenommen, die in einer Spindellagerung 4 gelagert ist. Die Spindellagerung 4 stützt sich auf einer geschlitzten Platte 10 ab ; die Wuchtspindel 25 wird über einen Keilriemen 5 von einem Antriebsmotor 6, welcher auf einer Grundplatte 7 befestigt ist, angetrieben. Anstelle eines Keilriemens 5 kann auch jedes andere Übertragungsglied zwischen Motor 6 und Wuchtspindel 25 zum Antrieb der Wuchtspindel 25 eingesetzt werden, wie beispielsweise eine Zahnradübersetzung oder eine Gelenkwelle. Die geschlitzte Platte 10 ist an ihrem unteren Ende ebenfalls mit der Grundplatte 7 verbunden. Die geschlitzte Platte 10 trägt außerdem einen Schwingungsumformer 12, dessen Meßrichtung parallel zur Rotationsachse 27 der Wuchtspindel 25 verläuft, um die Drehbewegungen eines Mittelteiles (vgl. Fig. 2) der geschlitzten Platte 10 um eine Achse 16 aufzunehmen. Diese Drehbewegung um die Achse 16 entspricht dem Unwuchtanteil, der zufolge eines Unwuchtmomentes entsteht. Der zufolge einer Einzelkraft entstehende Unwuchtanteil wird von einem weiteren Schwingungsumformer 13 aufgenommen, dessen Meßrichtung parallel zu den Ausgleichsebenen 2, 3 verläuft.

Wird, wie in Fig. 1 dargestellt, ein Ventilator als auszuwuchtender Rotationskörper 1 benutzt, können zufolge Rotation Windkräfte auftreten, die in Richtung der Rotationsachse 27 wirken. Um diese axialen Kräfte abzufangen, sodaß sie keine Beeinflussung auf das Meßergebnis bewirken, wird ein Teil der geschlitzten Platte 10 über Flachfedern 9 gegen einen Bock 11 abgestützt. Im Bedarfsfalle kann die Grundplatte 7 mit einem Fundament 8 fest verbunden werden, um sicher zu stellen, daß bei beachtlichen Axialkräften der Axialschub über den Bock 11 eindeutig in das Fundament 8 abgeleitet werden kann.

Die Seitenansicht der erfindungsgemäßen federnden Abstützung gemäß Fig. 2 zeigt, daß die geschlitzte Platte 10 aus einem Rahmen 30 und einem gegenüber dem Rahmen 30 über Stege 14 beweglichen Mittelteil 15 besteht. Das bewegliche Mittelteil 15 ist über die Flachfedern 9 (vgl. Fig. 1) gegen den Bock 11 abgestützt. Die Flachfedern 9 sind im Bereich der Drehachse 16, welche gemäß Fig. 2 waagerecht und parallel zur Grundplatte 7 verläuft, angeordnet.

Wird nun über die Spindellagerung 4 eine vom auszuwuchtenden Rotationskörper 1 kommende Unwuchtwirkung auf das um die Drehachse 16 bewegliche Mittelteil 15 ausgeübt, so versucht das bewegliche Mittelteil 15 sich aus seiner vertikalen Lage, die es im unbelasteten Zustand mit dem Rahmen 30 einnimmt, herauszudrehen. Hierbei werden die Stege 14 links und rechts des Angriffspunktes 31 des Schwingungsumformers 12 im wesentlichen auf Biegung beansprucht. Die Verlagerung des Angriffspunktes 31 aus seiner Ruhelage in Richtung auf den Schwingungsumformer 12 oder in Richtung vom Schwingungsumformer stellen eine in elektrische Signale umzuwandelnde Information dar, welche Auskunft über die Größe eines Unwuchtmomentes in den Ausgleichsebenen 2, 3 des auszuwuchtenden Rotationskörpers 1 geben.

Die zufolge einer in dem auszuwuchtenden Rotationskörper 1 vorhandenen statischen Unwucht auftretenden Schwingungen verformen die Stege 14 translatorisch entsprechend Doppelpfeil 32 in vertikaler Richtung, und zwar sind im vorliegenden Ausführungsbeispiel die Stege 14 als Parallellenker 14a und 14b bzw. 14c und 14d ausgebildet. Die vertikale Schwingungsbewegung des Mittelteils 15 wird auf den weiteren Schwingungsumformer 13 übertragen, der im Ausführungsbeispiel gemäß Fig. 2 an der Achse 34 des Angriffspunktes 31 angreift.

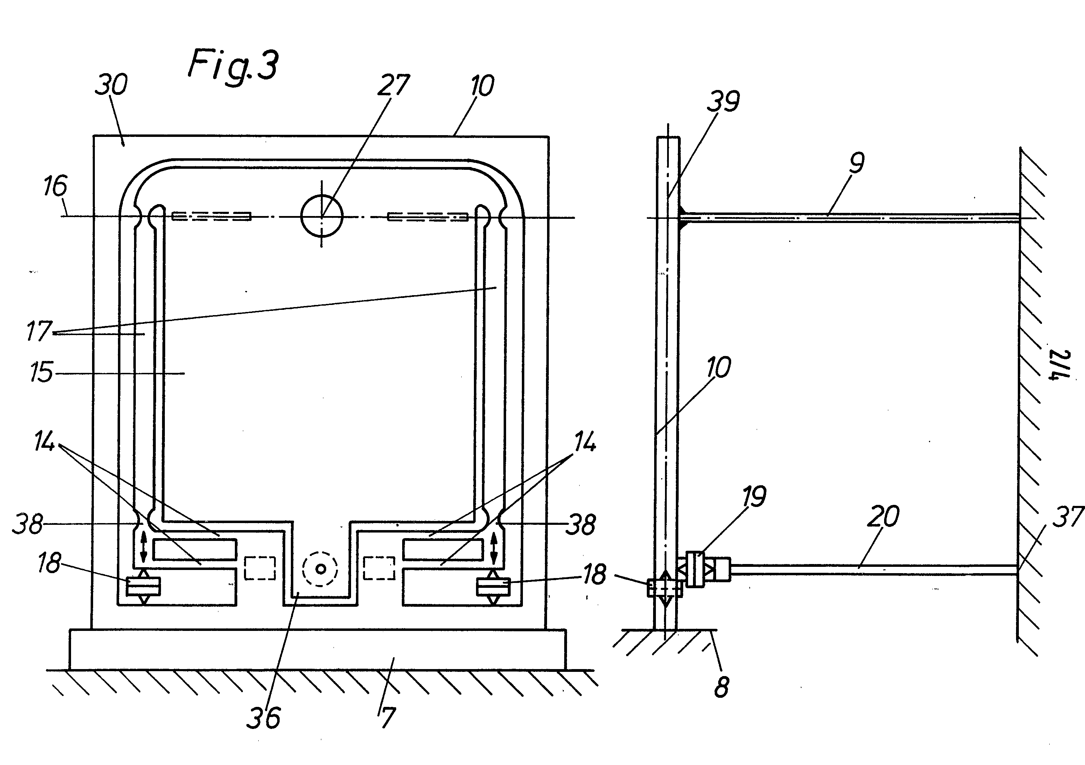

Die in Fig. 3 dargestellte erfindungsgemäße federnde Abstützung wird besonders vorteilhaft in Verbindung mit Kraftaufnehmern, wie Piezokristallen oder Dehnungsmeßstreifen, eingesetzt. Der Rahmen 30 der geschlitzten Platte 10 ist e tweder direkt mit dem Fundament 8 (vgl. Seitenansicht der Fig. 3) oder mit der Grundplatte 7 fest verbunden. Durch Brennschneiden wird aus der geschlitzten Platte 10 das Mittelteil 15 so herausgeschnitten, daß die Drehbewegungen des Mittelteils 15 um die Drehachse 16 praktisch unbeeinflußt über einen zungenförmigen Fortsatz 36 auf ein Kraftmeßelement 19 übertragen werden, welches seinerseits über einen Druckstab 20 gegen ein weiteres Fundament abstützbar ist. Durch Herausbrennen aus dem Plattenmaterial werden Stoßstangen 17 erzeugt, welche insbesondere im Bereich der Drehachse 16 soweit eingeschnürt sind, daß sie keine schädlichen die Messung beeinflussenden Biege- und Torsionskräfte hervorrufen, aufgrund derer die Drehbewegung des Mittelteils 15 beeinträchtigt wird. Die Stoßstangen 17 übertragen die translatorischen Zug- und Druckbelastungen, welche durch den statischen Unwuchtanteil weiteren Kraftmeßelementen 18 zugeführt werden, die zwischen den Stoßstangen 17 und dem Rahmen 30 angeordnet sind. Die Stoßstangen 17 sind selbst über Stege 14 parallel geführt, damit eine eindeutige Krafteinleitung in die weiteren Kraftmeßelemente 18 gewährleistet ist. Wie in fig. 3 schematisch dargestellt, besitzen die Stoßstangen 17 außer den Einkerbungen im Bereich der Drehachse 16 weitere Einkerbungen 38 bzw. 38a, womit die Sicherheit dafür gegeben ist, daß keine störenden Torsions- oder Biegemomente das in den weiteren Kraftmeßelementen 18 aufzunehmende Meßsignal, welches anschließend in ein weiterzuverarbeitendes elektrisches Signal umgewandelt wird, beeinflussen. Wie zu Fig. 2 bereits beschrieben, wird die Rotationsachse 27 der Wuchtspindel 25 über Flachfedern 9 gegen das weitere Fundament 37 oder gegen einen Bock 11 abgestützt.

Auch bei dieser erfindungsgemäßen federnden Abstützung ist die Meßrichtung des Kraftmeßelements 19 parallel zur Rotationsachse 27 des auszuwuchtenden Körpers und die Meßrichtung der beiden weiteren Kraftmeßelemente 18, die links und rechts der Rotationsachse 27 das Mittelteil 15 über Stoßstengen 17 auf dem Rahmen 30 abstützen, parallel zu einer Ausgleichsebene innerhalb der federnden Abstützung, sodaß ihre Meßrichtung gemäß Fig. 3 in einer senkrechten Achse 39 verläuft.

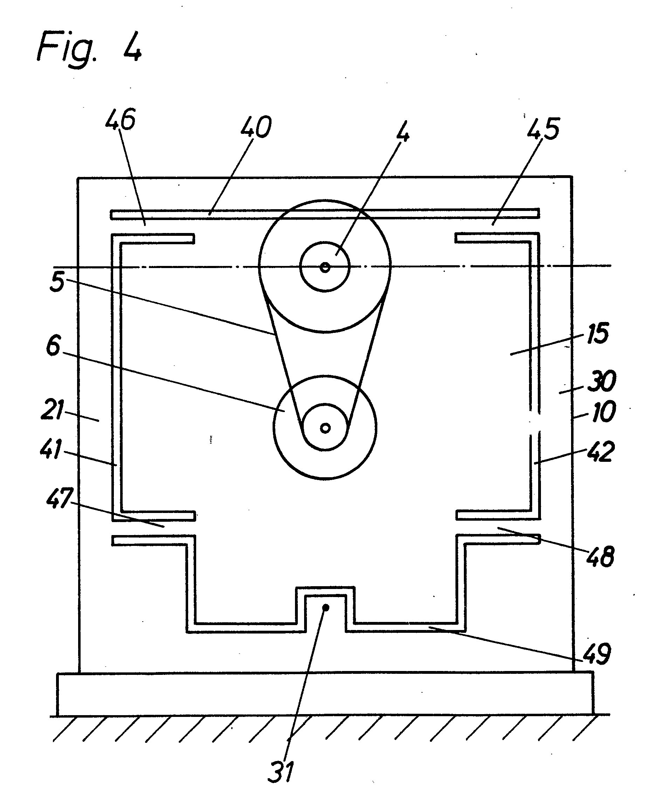

Die in Fig. 4 dargestellte weitere besonders vorteilhafte erfindungsgemäße Ausgestaltung der federnden Abstützung zeichnet sich dadurch aus, daß das Mittelteil 15 außer der Spindellagerung 4 auch den Antriebsmotor 6 und das Antriebsübertragungsmittel 5 trägt. Beispielsweise durch Brennschneiden wird die geschlitzte Platte 10 in den Rahmen 30 und das Mittelteil 15 aufgetrennt, wobei zwischen den Schlitzen 40 einerseits und 41, 42 andererseits ein federndes Stegpaar 45, 46 gebildet wird, welches oberhalb der Drahachse 16 den Rahmen 30 vom Mittelteil 15 trennt und wobei anderseits über die Schlitze 41, 42 einerseits und einen Schlitz 49 andererseits ein zweites Stegpaar 47, 48 gebildet wird, welches unterhalb der Drehachse 16 als einzige federnde Verbindung zwischen dem Rahmen 30 und dem Mittelteil 15 verbleibt. Zufolge dieser erfindungsgemäßen federnden Abstützung, bei der Antriebsmotor 6, Übertragungsmittel 5 und Spindellagerung 4 auf dem Mittelteil 15 angeordnet sind, werden nicht nur in besonders vorteilhafter Weise die durch den Riemenzug entstehenden Kräfte augenommen, sondern es können auch die wegmessenden Schwingungsumformer 12, 13 an anderen wie in Fig. 1 und Fig. 2 dargestellten Stellen beispielsweise im Bereich des Stegpaares 45, 45 oberhalb des Schlitzes 40 für die translatorischen Zug- und Druckkräfte angeordnet werden und es kann der Schwingungsumformer 12 zur Messung der Verdrehung des Mittelteils 15 zufolge eines Unwuchtmomentes zwischen Drehachse 16 und Schlitz 40 angeordnet werden. Weiterhin ist es durch diese erfindungsgemäße Ausgestaltung möglich, wie in Fig. 3 für kraftmessende Aufnehmer 18, 19 dargestellt, mehrere derartiger Kraftaufnehmer anzuordnen, wenn auch hier die Bedingung erfüllt ist, daß die Drehschwingungen um die Achse durch Aufnehmer aufgenommen werden, deren Meßachse parallel zur Wuchtspindelachse ist und die Meßachse der durch den statischen Anteil der Unwuchtschwingung hervorgerufenen Schwingung parallel zu einer Ausgleichsebene ist und entlang der senkrechten Achse 39 verläuft.

Durch entsprechende elektrische Schaltung der Schwingungsaufnehmer 12, 13 bzw. 18, 19 ist es auch möglich, daß die Drehung das Mittelteils 15 um die Drehachse 16 von einem Schwingungsumformer aufgenommen wird, der zwischen Drehachse 16 und Schlitz 40 angeordnet ist und gleichzeitig von einem weiteren Schwingungsumformer aufgenommen wird, der die Drehbewegung am Angriffspunkt 31 aufnimmt. In derselben Weise sind auch die in Richtung der senkrechten Achse translatorischen Schwingungen, welche von der statischen Unwucht herrühren, durch Schwingungsumformer abnehmbar, deren Maßachsen in oder parallel zur geschlitzten Plattenebene 39 verlaufen und die einmal die Bewegung des Mittelteils unter Zuhilfenahme des Schlitzes 40 und zum anderen unter Zuhilfenahme des Schlitzes 49 bestimmen. Eine derartige erfindungsgemäße Anordnung besitzt den besonderen Vorteil der Kompensationsmöglichkeit von Fehlereinflüssen.

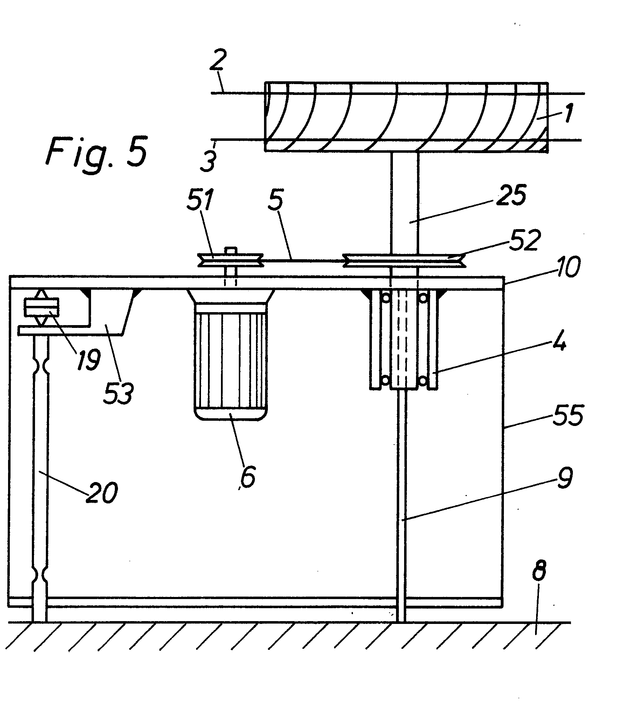

Fig. 5 stellt die Anwendung einer federnden Abstützung gemäß Fig. 4 bei einer Auswuchtmaschine dar, deren Wuchtspindel 25 vertikal verläuft. Die geschlitzte Platte 10 trägt in ihrem Mittelteil 15 die Spindellagerung 4 und auch den Antriebsmotor 6 einschließlich dem Keilriemen 5, welcher mittels Keilriemenscheiben 51, 52 die Wuchtspindel 25 antreibt. Der auszuwuchtende Rotationskörper 1, die Wuchtspindel 25 und die Spindellagerung 4 sind über die Flachfedern 9 direkt auf dem Fundament 8 abgestützt, während die Bewegung des zungenförmigen Fortsatzes 36 über eine am Rahmen 30 angeordnete Halterung 53, die über die Abstützung 20 gegenüber dem Fundament 8 abgestützt ist, unter Zwischenschaltung des Kraftmeßelementes 19 gemessen wird. Damit ist eine Auswuchtmaschine mit vertikaler Wuchtspindel geschaffen worden, die sich lediglich über die Flachfedern 9 und die Abstützung 20 auf einem Fundament abstützt und wobei eine die Auswuchtmaschine umkleidende Abdeckung 55 frei von der Beeinflussung durch Unwuchtkräfte ist.

**Ansprüche**

1. Verfahren zur Bestimmung der Unwucht eines Rotationskörpers (1) in zwei parallelen senkrecht auf dessen Rotationsachse stehenden Ausgleichsebenen (2, 3) durch Zerlegen der Unwuchtwirkung in einen Momenten- und einen Kraftanteil mit Hilfe einer parallel zu den Ausgleichsebenen angeordneten Platte (10) dadurch gekennzeichnet, daß die Gesamtunwuchtwirkung der Platte (10), die partiell federnd ausgebildet ist, induziert wird, daß der Momentenanteil der Unwuchtwirkung zufolge Drehung des federnden Plattenteils (15) gegenüber dem festsehenden Plattenteil (30) um eine Achse (16) senkrecht zur Rotationskörperdrehachse (27) als Schwingung weitergegeben wird, und daß der Kraftanteil zufolge translatorischer Bewegung des federnden Plattenteils (15) als Schwingung weitergegeben wird.

2. Verfahren zur Bestimmung der Unwucht nach Anspruch 1 dadurch gekennzeichnet, daß die Weitergabe der getrennten Schwingungen senkrecht zueinander erfolgt.

3. Verfahren zur Bestimmung der Unwucht nach Anspruch 1 und/oder 2 dadurch gekennzeichnet, daß die Weitergabe der durch das Unwuchtmoment hervorgerufenen Schwingungen parallel zur Rotationsachse (27) und die durch die Kraft hervorgerufene translatorische Schwingung parallel zu einer Ebene senkrecht zur Rotationsachse (27) erfolgt.

4. Vorrichtung zur Durchführung des Verfahrens nach einem oder mehreren der vorhergehenden Ansprüche mit einer Auswuchtmaschine mit Lagerständer und einer sich auf einer Platte (10) abstützenden Wuchtkörperlagerung (4, 25) für den auszuwuchtenden Rotationskörper (1) und mit Schwingungsumformern (12, 13 bzw. 18, 19) dadurch gekennzeichnet, daß die Platte (10) dergestalt mit Schlitzen versehen ist, daß die Drehschwingungen der Platte (10) über auf Biegung beanspruchte Stege (14a, 14b, 14c, 14d bzw. 45, 46, 47, 48) weiterleitbar sind und die translatorischen Schwingungen der geschlitzten Platte (10) über auf Druck und Zug beanspruchte Stege (14a, 14b, 14c, 14d bzw. 17) der geschlitzten Platte (10) weiterleitbar sind.

5. Vorrichtung zur Durchführung des Verfahrens nach einem oder mehreren der vorhergehenden Ansprüche 1 bis 3 mit einer Auswuchtmaschine mit Lagerständer und einer sich auf einer Platte (10) abstützenden Wuchtkörperlagerung (4, 25) für den auszuwuchtenden Rotationskörper (1) und mit Schwingungsumformern (12, 13 bzw. 18, 19) dadurch gekennzeichnet, daß die Platte (10) dergestalt mit Schlitzen versehen ist, daß Stege (14a, 14b, 14c, 14d bzw. 45, 46, 47, 48) durch die Unwuchtwirkung gleichzeitig auf Zug, Druck und Biegung in zwei räumlichen senkrecht aufeinander stehenden Richtungen beansprucht werden, und daß mindestens zwei Schwingungsumformer (12, 13 bzw. 18, 19), deren Meßrichtungen senkrecht aufeinander stehen, deren Verformung messen.

6. Vorrichtung nach Anspruch 4 oder 5 dadurch gekennzeichnet, daß bei vertikaler Anordnung der Rotationsachse (27) das Gewicht des Rotationskörpers (1) über mindestens eine vertikale Stütze (9) und daß die Reaktionskraft des Schwingungsumformers (19) für die Drehschwingungen über eine weitere vertikale Stütze (20) direkt gegen das Fundament (8) abstützbar sind.

7. Vorrichtung nach einem oder mehreren der vorhergehenden Ansprüche dadurch gekennzeichnet, daß die Platte (10) einstückig ist.

## Claims

1. A method of determining the imbalance of a rotation body (1) in two parallel balancing planes (2, 3) which are perpendicular to the axis of rotation of the rotation body by breaking down the imbalance effect into a moment and a force component with the aid of a plate (10) arranged parallel to the balancing planes characterised in that there is induced the overall imbalance of the plate (10), part of which is resilient; that the moment component of the imbalance effet is transmitted in the form of an oscillation as a result of rotation of the resilient part of the plate (15) relative to the fixed part of the plate (30) about an axis (16) perpendicular to the axis (27) of rotation of the rotation body; and that the force component is transmitted in the form of an oscillation as a result of translational movement of the resilient plate part (15).

2. A method of determining imbalance according to claim 1, characterised in that the separated oscillations are transmitted perpendicularly to each other.

3. A method of determining imbalance according to claim 1 and/or 2 characterised in that the oscillations causeb by the imbalance moment are transmitted parallel to the axis of rotation (27) and the translational oscillation caused by the force is parallel to a plane perpendicular to the axis of rotation (27).

4. A device for carrying out the method according to one or more of the preceding claims with a balancing machine having a bearing support and an inertia body mounting (4, 25) which is supported on a plate (10), for the rotation body (1) which is to be balanced and with oscillation converters (12, 13 or 18, 19) characterised in that the plate (10) is so provided with slots that the rotational oscillations of the plate (10) may be transmitted via webs (14a, 14b, 14c, 14d or 45, 46, 47, 48) which are flexurally loaded and the translational oscillations of the slotted plate (10) may be transmitted via webs (14a, 14b, 14c, 14d or 17) of the slotted plate (10) which are put under compression and tension loads.

5. A device for carrying out the method according to one or more of the preceding claims 1 to 3 with a balancing machine having a bearing support and an inertia body mounting (4, 25) which is supported on a plate (10), for the rotation body (1) which is to be balanced and with oscillation converters (12, 13 or 18, 19) characterised in that the plate (10) is so provided with slots that webs (14a, 14b, 14c, 14d or 45, 46, 47, 48) are put under simultaneous tension, compression and flexure loads in two spatially perpendicular directions by the imbalance effect; and that at least two oscillation converters (12, 13 or 18, 19), whose measurement directions are perpendicular to each other, measure their deformation.

6. A device according to claims 4 or 5 characterised in that when the rotation axis (27) is vertically arranged, the weight of the rotation body (1) may be supported by at least one vertical support (9) and that the reaction force of the oscillation converter (19) for the rotational oscillations may be supported by a further vertical support (20) directly adjacent the base (8).

7. A device according to one or more of the preceding claims characterised in that the plate (10) is in one piece.

## Revendications

1. Dispositif pour déterminer le balourd d'un corps tournant (1) dans deux plans d'équilibrage (2, 3) parallèles et perpendiculaires à son axe de rotation par décomposition de l'effet de balourd en une composante de couple et une composante de force à l'aide d'une plaque (10) déposée parallèlement aux plans d'équilibrage, caractérisé en ce que l'effet de balourd total de la plaque (10), qui est constituée partiellement de façon élastique, est induit, que la composante de couple de l'effet de balourd est transmise sous forme d'une oscillation autour d'un axe (16) perpendiculaire à l'axe de rotation (27) du corps tournant à la suite de la rotation de la partie élastique (15) de la plaque par rapport à la partie fixe (30) de la plaque, et que la composante de force est transmise sous forme d'une oscillation à la suite du mouvement en translation de la partie élastique (15) de la plaque.

2. Procédé pour déterminer un balourd selon la revendication 1, caractérisé en ce que la transmission des oscillations séparées s'effectue perpendiculairement l'une par rapport à l'autre.

3. Procédé pour déterminer un balourd selon la revendication 1 et/ou 2, caractérisé en ce que la transmission des oscillations suscitées par le couple du balourd s'effectue parallèlement à l'axe de rotation (27) et en ce que l'oscillation en translation provoquée par la force s'effectue parallèlement à un plan qui est perpendiculaire à l'axe de rotation (27).

4. Dispositif pour la mise en œuvre du procédé selon une ou plusieurs des revendications précédentes au moyen d'une machine d'équilibrage comprenant des supports d'appui, et un support (4, 25) monté sur une plaque (10) et destiné au corps tournant (1) à équilibrer et des convertisseurs d'oscillations (12, 13 ou 18, 19), caractérisé en ce que la plaque (10) est munie de fentes de manière que les oscillations tournantes de la plaque (10) puissent être transmises par l'intermédiaire de traverses (14a, 14b, 14c, 14d, ou 45, 46, 47, 48) qui sont sollicitées en flexion et en ce que les oscillations en translation de la plaque fendue (10) puissent être transmises par l'intermédiaire de traverses (14a, 14b, 14c, 14d ou 17) de la plaque fendue (10) qui sont sollicitées en pression et en traction.

5. Dispositif pour la mise en œuvre du procédé selon l'une ou plusieurs des revendications 1 à 3, au moyen d'une machine d'équilibrage comprenant des supports d'appui, et un support (4, 25) monté sur une plaque (10) et destiné au corps tournant (1) à équilibrer et des convertisseurs d'oscillations (12, 13 ou 18, 19), caractérisé en ce que la plaque (10) est munie de fentes, en ce que des traverses (14a, 14b, 14c, 14d, ou 45, 46, 47, 48) sont sollicitées simultanément en traction, en flexion et en pression par l'effet de balourd dans deux directions perpendiculaires l'une à l'autre dans l'espace, et en ce qu'au moins deux convertisseurs d'oscillations (12, 13 ou 18, 19) dont les directions de mesure sont perpendiculaires l'une à l'autre, mesurent leur déformation.

6. Dispositif selon la revendication 5, caractérisé en ce que lorsque l'axe de rotation (27) est vertical, le poids du corps tournant (1) peut s'appuyer sur au moins un appui vertical (9) et en ce que la force de réaction du convertisseur (19) des oscillations tournantes peut s'appuyer directement sur le fondement (8) par l'intermédiaire d'un autre appui vertical (20).

7. Dispositif selon une ou plusieurs des revendications précédentes, caractérisé en ce que la plaque (10) est en une seule pièce.

Fig.1

Fig.2

Fig.3

Fig. 4

Fig. 5